# EUROPÄISCHE PATENTANMELDUNG

(11) **EP 4 159 359 A1**
(43) Veröffentlichungstag der Anmeldung: **05.04.2023**
(21) Anmeldenummer: 21200286.9
(22) Anmeldetag: 30.09.2021
(51) Int. Cl.: B23K 35/02, B23K 35/26, C22C 13/02, C22C 1/02, C22C 1/03

(54) **NICHT-EUTEKTISCHE SN-BI-IN LOTLEGIERUNGEN**

(71) Anmelder: ZKW Group GmbH, 3250 Wieselburg (AT)
(72) Erfinder: Kieslinger, Dietmar, 2604 Theresienfeld (AT); Bayer, Jakob, 1080 Wien (AT); Magnien, Julien, 8605 Kapfenberg (AT); Melnic, David, 1090 Wien (AT); Siroky, Georg, 2651 Reichenau and der Rax (AT)
(74) Vertreter: Patentanwaltskanzlei Matschnig & Forsthuber OG

(57) **Zusammenfassung**

Die Erfindung betrifft neuartige niedrigschmelzende Lotlegierungen zur elektrischen, thermischen und bedingt mechanischen Anbindung von elektronischen Bauteilen an ein Substrat. Die Lotlegierung gemäß der Erfindung weist eine Legierungszusammensetzung auf, die besteht aus, in Gew.-%: 22,0 - 40,0 Gew.-% Bi, 6,0 - 12,0 Gew.-% In, bis zu 1,4 Gew.-% Cu, Rest Sn und unvermeidbare Verunreinigungen. Die Erfindung betrifft ferner Verwendungen dieser Lotlegierungen sowie Erzeugnisse und Vorrichtungen umfassend diese Lotlegierungen.

## Beschreibung

### TECHNISCHES GEBIET DER ERFINDUNG

Die Erfindung betrifft neuartige niedrigschmelzende Lotlegierungen zur elektrischen, thermischen und bedingt mechanischen Anbindung von elektronischen Bauteilen an ein Substrat. Die Erfindung betrifft ferner Verwendungen dieser Lotlegierungen sowie Erzeugnisse und Vorrichtungen umfassend diese Lotlegierungen.

### HINTERGRUND DER ERFINDUNG

Es ist bekannt, elektronische Bauteile unter Verwendung von Weichloten mit einem Schaltungsträger wie z.B. einer Leiterplatte bzw. den Leiterbahnen auf einem Schaltungsträger zu verbinden. Diese Weichlote sind typischerweise Sn-basiert. In der Elektronikfertigung sowie in der Automobilindustrie gehören Sn-Ag-Cu-Lotlegierungen, z.B. die Standardlegierung SAC305, zu den am häufigsten eingesetzten Weichloten. Aufgrund der eingesetzten Materialien im elektronischen Bauteil und im Schaltungsträger ergeben sich im Betrieb unvermeidliche Unterschiede in der Wärmeausdehnung. Unter Temperaturwechselbedingungen entstehen daraus mechanische Spannungen in der Lötverbindung (hierin synonym auch als Lötstelle bezeichnet). Die Geometrie der Lötstelle, die Größe des Temperaturunterschieds während des Temperaturwechsels sowie die eingesetzten Materialien führen dazu, dass das Lot an der Lötstelle in den meisten Fällen deutlich über die Elastizitätsgrenze hinaus belastet wird. Unter zyklischer Beanspruchung, z.B. Temperaturwechsel im laufenden Betrieb von elektronischen Baugruppen, treten mechanische Spannungen auf und das Lot wird an der Lötstelle wiederholt plastisch verformt, was zu Low-Cycle-Fatigue (LCF-Ermüdung) führt. Das typische Schädigungsbild sind Risse im Lotmaterial, die über die Schädigungsdauer wachsen und schlussendlich zum vollständigen Versagen der Lötstelle durch Bruch führen.

Um dieses Problem zu lösen, wurden in der Vergangenheit insbesondere Ansätze hinsichtlich der Optimierung der thermomechanischen Eigenschaften der Lotlegierung verfolgt.

Der Ansatz, die Elastizitätsgrenze zu höheren Spannungen hin zu verschieben, wurde bereits eingehend verfolgt; siehe z.B. Lotlegierungen wie INNOLOT, beschrieben in EP1617968B1. Das Problem dabei ist, dass derartige Legierungen mechanische Spannung nicht abbauen, sondern lediglich umverteilen. Da das Lot in einem derartigen System nicht mehr nachgibt und die Spannung nicht relaxiert, können andere Materialien oder Grenzflächen überlastet werden. Infolgedessen kommt es zu Schädigungsentwicklungen und zum Ausfall des Systems aufgrund von anderen Ermüdungs- und Ausfallsmechanismen. Außerdem kann die Elastizitätsgrenze nur in gewissen Grenzen verschoben werden, ohne die LiquidusTemperatur der Lotlegierung zu weit zu erhöhen.

Ein anderer Ansatz besteht darin, möglichst duktile Lotlegierungen zu verwenden, d.h. Legierungen, die in einem Deformationszyklus möglichst wenig Schädigung davontragen. Typische Vertreter dieser Klasse sind In-legierte Sn-Basislote, typischerweise mit einem In-Anteil von 2 bis 6 Gew.-%. Auch bei diesen Lotlegierungen liegt Low-Cycle-Fatigue (LCF-Ermüdung) vor, der Ausfall durch Bruch der Lötstelle wird lediglich zeitlich hinausgezögert.

Die oben beschriebenen Ansätze mögen für gewisse Anwendungen zwar ausreichend sein, stellen aber im Zusammenhang mit positionskritischen elektronischen Bauteilen/Baukomponenten, die im Betrieb einer hohen zyklischen thermomechanischen Beanspruchung und einer erhöhten Vibrations- und Stoßbelastung ausgesetzt sind, keine zufriedenstellende Lösung dar, z.B. für von in Fahrzeugen verbauten elektronischen Bauteilen/ Baukomponenten.

### BESCHREIBUNG DER ERFINDUNG

Es ist daher eine Aufgabe der Erfindung, eine neue Lotlegierung bereitzustellen, mit welcher Lötstellen mit erhöhter Resistenz gegenüber Alterung/Ermüdung durch thermomechanische Beanspruchung realisierbar sind. Es ist insbesondere eine Aufgabe der Erfindung, eine Lotlegierung zur elektrischen, thermischen und bedingt mechanischen Anbindung von elektronischen Bauteilen von Fahrzeugen, insbesondere Kraftfahrzeugen, bereitzustellen. Konkret ist es eine Aufgabe der Erfindung, eine Lotlegierung bereitzustellen, die für den Einsatz in Anwendungen und Situationen geeignet ist, in denen von Low-Cycle-Fatigue auszugehen und daher eine strukturelle Schädigung und ein Ausfall der Lötverbindung unausweichlich ist.

Diese Aufgabe wird erfindungsgemäß durch eine nicht-eutektische Lotlegierung gelöst, mit einer Legierungszusammensetzung bestehend aus, in Gew.-%:
- Bi: 22,0 - 40,0 Gew.-%
- In: 6,0 -12,0 Gew.-%
- Cu: bis zu 1,4 Gew.-%
- Rest Sn und unvermeidbare Verunreinigungen.

Die Erfindung bezieht sich somit auf ein ternäres Legierungssystem aus Zinn, Bismut und Indium, mit der Option, durch geringfügige Zugabe von Kupfer eine quartäre Legierung herzustellen.

Die hierin beschriebenen Lotlegierungen können insgesamt bis zu 0,8 Gew.-% an unvermeidbaren Verunreinigungen enthalten. Die unvermeidbaren Verunreinigungen schließen nicht die Elemente Bi, In, Cu und Sn ein. Unvermeidbare Verunreinigungen können Verunreinigungen sein, die bei der Herstellung der Lotlegierungen nicht oder nur schwer gesteuert werden können. Diese können aus den verwendeten Rohstoffen und auch aus den involvierten Prozessen stammen. Die unvermeidbaren Verunreinigungen können insbesondere die Elemente Pb, Cd, Hg, Fe, Mn, Ni, Ag, Al, Zn, Sb und Co einschließen, deren jeweilige Anteile in der Legierung gewisse Grenzwerte nicht überschreiten sollten: Die Anteile von Pb, Hg, Sb und Co in der Legierung sollten nicht größer als jeweils 0,1 Gew.-% sein. Die Anteile von Fe und Mn in der Legierung sollten nicht größer als jeweils 0,5 Gew.-% sein. Die Anteile von Ni, Ag, Al und Zn in der Legierung sollten nicht größer als jeweils 0,2 Gew.-% sein. Der Anteil von Cd in der Legierung sollte nicht größer als 0,01 Gew.-% sein.

Die Erfindung stellt eine besondere Klasse von niedrigschmelzenden nicht-eutektischen Weichloten zur elektrischen, thermischen und bedingt mechanischen Anbindung von elektronischen Bauteilen bereit. Die hierin geoffenbarten Lotlegierungen weisen folglich einen Schmelzbereich mit einer unteren Solidustemperatur (T_{solidus}) und einer oberen Liquidustemperatur (T_{liquidus}) auf.

Bei Weichloten versucht man normalerweise, ein nicht-eutektisches Verhalten zu vermeiden und sucht nach eutektischen Legierungen mit einheitlichem Schmelzpunkt, da eutektische Legierungen eine einfachere und meistens feinkörnige Mikrostruktur zeigen. Im Gegensatz dazu setzt die vorliegende Erfindung nicht-eutektische Lotlegierungen, wie sie hierin geoffenbart sind, vorteilhaft ein.

Der besondere Vorteil der erfindungsgemäßen niedrigschmelzenden nicht-eutektischen Legierungen liegt darin, dass deren Solidustemperatur im Bereich der Lötverbindung unterhalb der typischen Lötstellentemperatur im Nennbetriebszustand von vielen z.B. im Automobilbereich eingesetzten elektronischen Baukomponenten liegt, und dass deren Liquidustemperatur im Bereich der Lötverbindung oberhalb der maximalen Lötstellentemperatur im Nennbetriebszustand dieser elektronischen Baukomponenten liegt. Besonders vorteilhaft kommt die Erfindung in Fahrzeugleuchtvorrichtungen, insbesondere in der Kraftfahrzeugscheinwerfertechnik zur Anwendung, welche im Betrieb zyklische Temperaturwechsel durchlaufen.

Im zyklischen Betrieb von elektronischen Baukomponenten treten wie oben beschrieben thermomechanische Spannungen auf, die eine Lötverbindung gemäß dem Stand der Technik deformieren, ermüden und schlussendlich reißen lassen. Auch in einer Lötverbindung, die mit der erfindungsgemäßen Lotlegierung hergestellt ist, können kleine, anfänglich submikroskopische Risse und Fehlstellen ausgebildet werden; sobald die mit dem erfindungsgemäßen Lot verlötete elektronische Baukomponente jedoch auf Nennbetriebstemperatur kommt, geht das erfindungsgemäße Lot in der Lötverbindung in einen teilgeschmolzenen Zustand über, der sich zwischen der Solidustemperatur und der Liquidustemperatur einstellt, wodurch in diesem "Heilungstemperaturbereich" kleinste Risse aufgefüllt werden und die Lötstelle heilt. Nach den ersten Temperaturzyklen tritt an der Lötverbindung keine dauerhafte Veränderung oder eine fortschreitende Materialermüdung mehr ein. Die erfindungsgemäßen Lote ermöglichen somit eine zuverlässige Elektronik bei Einsatztemperaturen der Elektronik im Bereich zwischen -40°C und +135°C, insbesondere zwischen +10°C und +120°C, und/oder bei hoher Temperaturwechsel-Beanspruchung. Sie sorgen daher für erhöhte Zuverlässigkeit und Sicherheit von elektronischen Lotverbindungen, insbesondere in Leistungselektronikbaukomponenten, die z.B. im Maschinenbau, Fahrzeugbau und in der Industrie- und Anlagenelektronik zum Einsatz kommen.

Daraus ergeben sich neben der beschriebenen Heilung von Rissen im Nennbetriebszustand die folgenden weiteren nützlichen Eigenschaften:
Der Reparaturmechanismus ist selbststabilisierend, d.h. eine stark gerissene Lötverbindung/Lötstelle führt naturgemäß zu einer heißeren Betriebstemperatur des verlöteten Bauteils, was wiederum das Lot an der Lötverbindung/Lötstelle stärker aufschmilzt und damit Risse und Fehlstellen schneller füllt und heilt.

Die elektronischen Bauteile können mit der erfindungsgemäßen Lotlegierungen wie üblich verarbeitet werden. Besonders vorteilhaft ist, dass die Lotlegierung im Rahmen eines in der Oberflächenmontage (SMT, *surface-mounting technology*) von elektronischen oberflächenmontierten Bauelementen (SMD, *surface-mounted device*) üblichen Reflow-Lötprozesses verarbeitet werden kann; unter Umständen mit einem angepassten Temperaturprofil, das eine Fachperson auf dem Gebiet ohne ungebührlichen Aufwand und in einfachen Routineversuchen aufgrund ihres Fachwissens festlegen kann. Die erfindungsgemäße Lotlegierung kann aber grundsätzlich in jedem (Weich) Lötprozess, die einer Fachperson auf dem Gebiet bekannt sind, eingesetzt werden. Bei positionskritischen oder schweren elektronischen Bauteilen oder bei hohen Anforderungen an die Vibrations- und Stoßfestigkeit kann es jedoch erforderlich sein, das Bauteil zusätzlich mechanisch nach an sich bekannter Art zu fixieren, z.B. mittels Klebepunkten.

Die Verarbeitung kann bei niedrigeren Temperaturen als im üblichen bleifrei-Prozess erfolgen und ist daher schonender für die elektronischen Bauteile und Schaltungsträger wie Leiterplatten.

Im teilflüssigen Zustand von Lötverbindungen, die auf den nicht-eutektischen Legierungen gemäß der Erfindung basieren (d.h. im erwähnten "Heilungstemperaturbereich" zwischen Solidustemperatur und Liquidustemperatur des Lots), besteht keine Gefahr, dass das Lot aus dem Lotspalt rinnt, so dass gelötete Bauteile stabil und positionsgenau an Ort und Stelle gehalten werden.

Es konnte zudem festgestellt werden, dass die Lotlegierung mit den wichtigsten bekannten Kontaktoberflächen ("Pads") kompatibel ist. Zudem können mittels der erfindungsgemäßen Lotlegierung Materialpaarungen (elektronisches Bauteil zu Leiterplatte) verarbeitet werden, die im Zusammenhang mit herkömmlichen Weichloten als inkompatibel ausgeschieden werden müssten. Dies bringt einerseits Kostenvorteile mit sich, andererseits können mehr Funktionen auf engem Raum untergebracht werden.

Die Erfindung stellt somit eine zufriedenstellende Lösung der oben genannten Aufgabe bereit, nämlich eine Lotlegierung, die für den Einsatz in Anwendungen und Situationen, in denen von Low-Cycle-Fatigue auszugehen und daher eine strukturelle Schädigung und ein Ausfall der Lötverbindung unausweichlich ist. Eine drastische Erhöhung der Festigkeit, so dass das Lot nur mehr im rein elastischen, reversiblen Bereich belastet wird, ist nicht realistisch und kein Ziel dieser Erfindung. Vielmehr geht es in der vorliegenden Erfindung darum, die aufgrund von Low-Cycle-Fatigue als unausweichlich akzeptierte, strukturelle Schädigung der Lötverbindung im Heilungstemperaturbereich zu heilen, was dank der spezifischen Zusammensetzung der erfindungsgemäßen Lotlegierung ermöglicht wird.

Nach bestem Wissen der Anmelderin und der beteiligten Erfinder ist bislang der kommerzielle Einsatz von Lötverbindungen von nicht-eutektischen Loten, die bei Nennbetriebstemperaturen von elektronischen Baukomponenten in einem teilflüssigen Zustand sind, nicht bekannt.

Das führende Element der Lotlegierung gemäß der Erfindung ist Zinn (Schmelzpunkt: 232°C), welches sich durch geringe Kosten, gesundheitlich weitgehende Unbedenklichkeit und einen jahrelangen Einsatz in Elektronikloten auszeichnet.

Auch Bismut ist schon seit langem als niedrig schmelzendes (Schmelzpunkt: 139°C) Elektroniklot bekannt. Reines Bismut zeigt eine anomale Volumenänderung beim Schmelzen, nämlich eine Volumenabnahme beim Übergang von der Festphase in die Flüssigphase. Dieser Effekt tritt in abgeschwächter Form auch in Bismut-reichen Mischphasen auf. Maßgeblich für die Erfindung ist, dass durch die Zugabe von Bismut in Kombination mit einer anderen Phase mit normalen Schmelzverhalten (positiver Volumensprung) das Ausdehnungsverhalten der Mischphase vorteilhaft beeinflusst werden kann; konkret kann so eine sehr geringe Volumensänderung beim Phasenübergang erreicht werden. Es wurde erkannt, dass sich Bismut hervorragend zur Senkung der LiquidusTemperatur in der erfindungsgemäßen Lotlegierung eignet. Die Phasenzusammensetzung der erfindungsgemäßen Lotlegierung ist zudem unempfindlich gegenüber Änderungen des Bismut-Anteils. Der Bismut-Anteil in der Zusammensetzung der Lotlegierung kann daher im Bereich von 22 - 40 Gew.-%, vorzugsweise im Bereich von 25 - 37 Gew.-% variiert werden. Dieser Freiheitsgrad kann genutzt werden, um den Bismutgehalt der Flüssigphase knapp über Solidus und damit den Volumensprung beim Aufschmelzen zu optimieren. Ein leicht positiver Volumensprung kann vorteilhaft sein, indem er die Flüssigphase lokal unter Druck setzt und so aktiv in mikroskopisch kleine Hohlräume wie Risse oder Fehlstellen presst. Ein positiver Volumensprung in einem dichten, intakten Gefüge kann jedoch zum gegenteiligen Effekt, nämlich der aktiven Schädigung, führen, weil die sich ausdehnende Bismut-reiche Flüssigphase das starre Gerüst aufsprengt. Höhere Bismut-Anteile sind in der vorliegenden Erfindung daher in Anwendungen sinnvoll, die eine stärkere Vorschädigung erwarten lassen. Geringere Bismut-Anteile eignen sich besser für Anwendungen, in denen das Lot der Lötverbindung oft in den Heilungstemperaturbereich kommt und daher nur sehr geringe Rissvolumina zu füllen sind. Eine Fachperson auf diesem Gebiet der Technik ist ohne Weiteres in der Lage, anhand der Lehre dieser Offenbarung und in Abhängigkeit der jeweiligen Anwendung, den Bismut-Anteil der erfindungsgemäßen Lotlegierung entsprechend zu wählen.

Als weiteren Bestandteil enthält die Lotlegierung Indium, welches als Reinsubstanz extrem duktil und niedrigschmelzend (157°C) ist. Es ist bekannt, dass Indium in Legierungssystemen, z.B. in binären Systemen [Yeh et al, 2009, Study on the solidus line in Sn-rich region of Sn-In-phase diagram, Journal of Phase Equilibria and Diffusion 30:254-257], ein kritisches Verhalten zeigt und komplexe Wechselwirkungen mit Legierungspartnern eingeht. Maßgeblich für die Erfindung ist, dass der Indium-Anteil in der erfindungsgemäßen Lotlegierung daher besonders kritisch in einem relativ engen Bereich einzustellen ist; der Indium-Anteil in der Lotlegierung liegt bei 6,0 -12,0 Gew.-%, vorzugsweise bei 8,5 -12 Gew.-% Indium, noch bevorzugter bei 9,0 - 11,0 Gew.-% Indium. Bei bestimmten vorteilhaften Ausführungsformen liegt der Indium-Anteil in der Lotlegierung bei etwa 9,5 Gew.-% Indium, wobei unter dem Begriff "etwa" Abweichungen von +1/-0,4 Gew.-% zu verstehen sind. In Anwendungen, wo "kalte Temperaturzyklen" zwar selten, dafür aber mit großem Temperaturhub auftreten und kommerzielle Überlegungen besonders kritisch sind (z.B. in elektronischen Baukomponenten, die im Nennbetrieb zwar oft genug eine Temperatur von 85°C oder mehr erreichen, aber starken Thermozyklen von unter 70°C ausgesetzt sind), kann eine Indium-magere Lotlegierung mit einem Indium-Gehalt von 6,0 - 7,0 Gew.-% zum Einsatz kommen. Elektronische Baugruppen in Motor- und Getriebesteuereinheiten von Kraftfahrzeugen werden hingegen bei jedem Betriebszyklus des Kraftfahrzeugs normalerweise bis in den Heilungstemperaturbereich aufgeheizt, weshalb ein reiner Kaltzyklenbetrieb sehr unwahrscheinlich ist und ein höherer Indium-Anteil in der Legierung von Vorteil ist. Eine Fachperson auf diesem Gebiet der Technik ist ohne Weiteres in der Lage, anhand der Lehre dieser Offenbarung und in Abhängigkeit der jeweiligen Anwendung, den Indium-Anteil der erfindungsgemäßen Lotlegierung entsprechend zu wählen.

Als geringeren Legierungsbestandteil kann die erfindungsgemäße Lotlegierung noch bis zu 1,4 Gew.-% Kupfer enthalten. Die Zugabe von geringen Mengen an Kupfer von bis zu 1,4 Gew.-% kann die Ausbildung einer Cu(In,Sn)-Grenzschicht an der Oberfläche zu massivem Kupfer (z.B. elektrischen Anschlüssen) beschleunigen und so das Ablegieren von Kupfer in das Lot bzw. das Auswandern von Indium in das massive Kupfer reduzieren.

Das hier beschriebene Legierungssystem ist dazu gedacht, eine elektrische, thermische und bedingt mechanische Verbindung herzustellen, typischer Weise zwischen dem Anschluss eines elektronischen Bauteils und der Kontaktfläche einer Leiterplatte. Neben den Bulk-Eigenschaften der Legierung sind daher auch die Grenzflächen zu typischen Fügepartnern relevant. Wie oben erwähnt liegt ein großer Vorteil der Erfindung auch darin, dass die hierin beschriebenen erfindungsgemäßen Lotlegierungen mit den wichtigsten bekannten Kontaktoberflächen ("Pads") kompatibel sind. Ausgehend von üblichen Oberflächen in der Elektronik (OSP, chemisch Zinn, HA(S)L, ENIG und ENEPIG) sind die Wechselwirkungen der Legierung mit Kupfer (bulk), Nickel (dicke Schichten, quasi-bulk), Gold (dünne Schichten < 1µm Dicke) und Palladium (dünne Schichten < 1µm Dicke) relevant und, ohne an eine bestimmte Theorie gebunden zu sein, kann in Bezug auf diese üblichen Elektronik-Oberflächen im Zusammenhang mit der erfindungsgemäßen Lotlegierung Folgendes angenommen werden:
- Kupfer: Zu Bulk-Kupfer bildet sich eine komplexe Abfolge von Cu₃Sn und einer Cu(Sn, In) Mischphase aus.
- Nickel: Die Nickelschicht in ENIG und ENEPIG Oberflächen bildet im Allgemeinen eine komplexe Mikrostruktur an der Grenzfläche zu Zinn-Basislegierungen aus, da prozessbedingt mehrere Prozent Phosphor in den oberflächennahen Schichten enthalten sind. Neben Ni₃Sn₂ sowie Ni₃Sn₄ bilden sich auch Ni₂In₃ sowie stöchiometrisch nicht eindeutig identifizierbare phosphorhaltige Bereiche aus.
- Gold: Die Mobilität von Gold in der Legierung ist hoch, es erfolgt daher keine dauerhafte Ausbildung einer an der Grenzfläche lokalisierten goldhaltigen Zone. Primär bildet sich feinst verteiltes AuIn₂, in Ausnahmefällen auch AuSn₄. Beide Verbindungen haben keinen nennenswerten Einfluss auf die Lötstelle.
- Palladium: Ähnlich wie Gold liegt Pd nur in dünnen Schichten vor. Das sich voraussichtlich bildende PdSn₄ liegt verteilt in der Lötstelle vor und hat keinen nennenswerten Einfluss auf die Funktion der Lötstelle.

In einer spezifischen Ausführungsform der nicht-eutektischen Lotlegierung besteht die Legierungszusammensetzung aus, in Gew.-%:
- Bi: 25,0 - 37,0 Gew.-%
- In: 8,5 -12,0 Gew.-%
- Cu: bis zu 1,4 Gew.-%
- Rest Sn und unvermeidbare Verunreinigungen. Die unvermeidbaren Verunreinigungen sind wie weiter oben definiert.

In einer weiteren spezifischen Ausführungsform der nicht-eutektischen Lotlegierung besteht die Legierungszusammensetzung aus in Gew.-%:
- Bi: 25,0 - 37,0 Gew.-%
- In: 9,0 - 11,0 Gew.-%
- Cu: bis zu 1,4 Gew.-%
- Rest Sn und unvermeidbare Verunreinigungen. Die unvermeidbaren Verunreinigungen sind wie weiter oben definiert.

In einer weiteren spezifischen Ausführungsform der nicht-eutektischen Lotlegierung besteht die Legierungszusammensetzung aus in Gew.-%:
- Bi: 31,0 Gew.-%
- In: 9,5 Gew.-%
- Cu: bis zu 1,4 Gew.-%
- Rest Sn und unvermeidbare Verunreinigungen. Die unvermeidbaren Verunreinigungen sind wie weiter oben definiert.

In einer weiteren spezifischen Ausführungsform enthält die nicht-eutektische Lotlegierung in ihrer Legierungszusammensetzung 25 - 37 Gew.-% Bismut.

In einer weiteren spezifischen Ausführungsform enthält die nicht-eutektische Lotlegierung in ihrer Legierungszusammensetzung 8,5 -12 Gew.-% Indium, vorzugsweise 9,0 - 11,0 Gew.-% Indium, am meisten bevorzugt etwa 9,5 Gew.-% Indium.

Vorzugsweise weist die nicht-eutektische Lotlegierung gemäß der Erfindung eine Solidustemperatur (T_{solidus}) von ≥ 75°C und eine Liquidustemperatur (T_{liquidus}) von ≤ 210°C, vorzugsweise eine Solidustemperatur (T_{solidus}) von ≥ 75°C und eine Liquidustemperatur (T_{liquidus}) von ≤ 185°C, auf. Die Solidus- und Liquidustemperatur können mittels dynamischer Differenzkalorimetrie (DSC, differential scanning calorimetry) bestimmt werden. Charakteristische Phasenübergänge im Bereich von 95°C bis 115°C können als eine Art Fingerprint genutzt werden, um den korrekten In-Gehalt in der Lotlegierung sicherzustellen, da dieser sensibel auf die Legierungszusammensetzung reagiert. Darüber hinaus kann das Gefüge nach an sich bekannter Art und Weise mittels Metallographie/Rasterelektronenmikroskopie (REM) dargestellt und mittels REM/EDX chemisch charakterisiert werden.

Die Herstellung der erfindungsgemäßen Lotlegierung kann im Bereich der hierin geoffenbarten und beanspruchten Mengenverhältnisse der Bestandteile durch direktes Zusammenschmelzen der Bestandteile nach an sich bekannter Art und Weise erfolgen. Zinn, Bismut und Indium haben ausreichend ähnliche Schmelzpunkte, so dass auf eine Herstellung von Vorlegierungen verzichtet werden kann. Beispielsweise werden bei der Herstellung klein gestückelte Reinmetalle ("granules", "shots" oder auch mechanisch zerkleinertes Barrenmaterial) unter Schutzatmosphäre (z.B. Argon, Stickstoff) in einem inerten Behältnis (z.B. BS-Glas, Glaskeramik, Oxid-Keramik, Graphit) zusammen in passenden Mengenverhältnissen aufgeschmolzen. Die Schmelze wird anschließend mechanisch homogenisiert, z.B. durch Durchleiten von Inertgas in einem mechanisch oder magnetisch gekoppelten Rührwerk. Ein direkter Kontakt mit metallischen Oberflächen ist zu vermeiden, es können aufgrund der geringen Schmelztemperatur jedoch mit Polytetrafluorethylen (PTFE) beschichtete Oberflächen verwendet werden. Je nach Dauer der Homogenisierung, typischerweise 5 bis 30 min, kann bei Verwendung von PTFEbeschichteten Oberflächen mit Schmelztemperaturen zwischen 250 °C und 300 °C gearbeitet werden. Sofern auf PTFE verzichtet wird, kann auf bis zu 600°C erwärmt werden, da keiner der Legierungsbestandteile bis zu dieser Temperatur einen nennenswerten Dampfdruck aufweist. Vor dem Abgießen sollte die Schmelze auf < 300 °C abgekühlt werden, um die Erstarrungszeit in der Form nicht unnötig zu verlängern. Die Legierung kann in Edelstahl- oder Kupferformen abgegossen werden, da aufgrund des schnellen Erstarrens keine Kontamination zu erwarten ist. Andere Formmaterialien sind denkbar, sofern eine ausreichend schnelle Kühlgeschwindigkeit erreicht werden kann. Die Barrenform ist vorzugsweise so zu wählen, dass die Legierung mit > 2 K/s abgekühlt wird, um eine ausgeprägte Seigerung der Schmelze zu vermeiden.

Ist Kupfer als geringerer Legierungsbestandteil (bis zu 1,4 Gew.-%) in der Lotlegierung vorgesehen, ist die Verwendung einer Sn-Cu-Vorlegierung empfehlenswert. In-Cu-Vorlegierungen sind bedingt geeignet, sofern sichergestellt wird, dass temporär auftretende intermetallische Verbindungen in der Ziellegierung wieder vollständig in Lösung gehen. Bi-Cu-Vorlegierungen eignen sich weniger, da diese bereits bei 5 Gew.-% Cu in Bi eine Schmelztemperatur von ca. 500°C aufweisen und daher nur sehr langsam in einer Schmelze mit ca. 300°C in Lösung gehen.

Die Lotlegierung gemäß der Erfindung kann unter Anwendung aller einer Fachperson bekannten Techniken und Weisen in eine gewünschte Form gegossen werden, beispielsweise in Draht-, Stangen-, Strang-, Platten-, Barren-, Kügelchen- oder Streifenform oder nach an sich bekannter Art und Weise zu Lotformteilen/Preforms, Lotpulver oder Lötpaste verarbeitet werden.

Wie erwähnt liegt ein Vorteil darin, dass die Lotlegierung im Rahmen eines in der Oberflächenmontage (SMT, *surface-mounting technology*) von elektronischen oberflächenmontierten Bauelementen (SMD, *surface-mounted device*) üblichen Reflow-Lötprozesses verarbeitet werden kann.

Ein weiterer Gegenstand der Erfindung ist daher eine Lötpaste, umfassend: ein Gemisch aus einem Lotpulver aus der nicht-eutektischen Lotlegierung gemäß der Erfindung und wie hierin geoffenbart und Flussmittel. Die Lötpaste enthält vorzugsweise 50-60 Vol.-% Lotpulver und entsprechend 40-50 Vol.-% Flussmittel. Als Flussmittel sind grundsätzliche jegliche Arten von viskosen oder gelartigen Flussmitteln, die einer Fachperson auf dem Gebiet des Weichlötens bekannt sind, geeignet, z.B. KOKI TF-m880r, Almit BM-1 RMA nc, MBO FLT 396 oder MBO MOB 39. Für die Elektronikfertigung bzw. SMT werden jedoch vorzugsweise und nach an sich bekannter Art "no clean"-Flussmittel eingesetzt. Die Lötpaste gemäß der Erfindung wird insbesondere im Reflow-Lötprozess zum Löten von SMD-Bauteilen nach an sich bekannter Art und Weise eingesetzt.

Ein weiterer Gegenstand der Erfindung ist daher auch eine Lötverbindung enthaltend eine nicht-eutektische Lotlegierung mit einer Legierungszusammensetzung gemäß der Erfindung und wie hierin geoffenbart.

Ein weiterer Gegenstand der Erfindung ist daher auch die Verwendung einer erfindungsgemäßen Lotlegierung als Elektroniklot, insbesondere als Elektroniklot in SMT-Herstellungsverfahren, und als Lot zum Herstellen zumindest einer Lotverbindung zwischen zumindest einem elektronischen Bauteil und zumindest einem Schaltungsträger, wobei der Schaltungsträger vorzugsweise eine Leiterplatte ist.

Vorzugsweise wird die erfindungsgemäße Lotlegierung als Lot zum Herstellen zumindest einer Lotverbindung zwischen zumindest einem elektronischen Bauteil und zumindest einem Schaltungsträger, insbesondere einer Leiterplatte, verwendet wobei die Lotverbindung einen Bestandteil einer Fahrzeugkomponente bildet. Bevorzugt handelt es sich bei der Fahrzeugkomponente um eine Fahrzeugleuchtvorrichtung, bevorzugt um einen Kraftfahrzeugscheinwerfer.

Ein weiterer Gegenstand der Erfindung ist eine elektronische Baukomponente, umfassend: eine Lötverbindung, die durch Verlöten der hierin beschriebenen erfindungsgemäßen Lötpaste ausgebildet ist.

Die Erfindung betrifft ferner auch eine Schaltungsträgeranordnung, umfassend zumindest eine elektrische Kontaktfläche und zumindest ein mit der zumindest einen elektrischen Kontaktfläche mittels einer Lötverbindung verbundenes elektronisches Bauteil, wobei die Lötverbindung eine nicht-eutektische Lotlegierung gemäß der Erfindung enthält oder aus dieser besteht. Vorzugsweise umfasst die Schaltungsträgeranordnung zumindest eine Leiterplatte und zumindest ein elektronisches Bauteil. Vorzugsweise ist das zumindest eine elektronische Bauteil der Schaltungsträgeranordnung eine Lichtquelle.

Die Erfindung betrifft ferner ein Leuchtmodul für eine Kraftfahrzeugleuchtkomponente umfassend zumindest eine Schaltungsträgeranordnung gemäß der Erfindung.

Die Erfindung betrifft ferner eine Kraftfahrzeugleuchtkomponente umfassend zumindest eine Schaltungsträgeranordnung gemäß der Erfindung und/oder zumindest ein Leuchtmodul gemäß der Erfindung, wobei die Kraftfahrzeugleuchtkomponente im Nennbetrieb im Bereich der Lötverbindung einen Nennbetriebstemperaturbereich (Umgebungstemperatur der Kraftfahrzeugleuchtkomponente typischerweise zwischen ca. - 40°C bis ca. +120°C und die Lötstellentemperaturen typischerweise zwischen ca. -20°C bis ca. +135°C) aufweist, wobei der Nennbetriebstemperaturbereich zumindest teilweise mit dem Temperaturbereich zwischen der Solidustemperatur (T_{solidus}) und der Liquidustemperatur (T_{liquidus}) der in der Lötverbindung enthaltenen nicht-eutektischen Lotlegierung überlappt und unterhalb der Liquidustemperatur (T_{liquidus}) liegt, vorzugsweise liegt der Nennbetriebstemperaturbereich zwischen der Solidustemperatur (T_{solidus}) und der Liquidustemperatur (T_{liquidus}) der in der Lötverbindung enthaltenen nicht-eutektischen Lotlegierung, sodass die nicht-eutektische Lotlegierung der Lötverbindung in der Lage ist, aufgetretene Risse oder Fehlstellen in der Lötverbindung während des Nennbetriebs der Kraftfahrzeugleuchtkomponente zu heilen.

Die Erfindung betrifft ferner eine Signalleuchte, insbesondere Fahrtrichtungsanzeigeleuchte oder Heckleuchte für ein Kraftfahrzeug, umfassend eine elektronische Baukomponente, eine Schaltungsträgeranordnung, ein Leuchtmodul und/oder eine Kraftfahrzeugleuchtkomponente gemäß der Erfindung. Der Aufbau einer Heckleuchte ist dem einschlägigen Fachmann bekannt. Heckleuchten umfassen häufig mehrere Leuchtmodule, z.B. eine Rücklichteinheit, eine Bremslichteinheit, eine Blinklichteinheit etc. Dementsprechend können die jeweiligen Leuchtmodule der Heckleuchte die Lichtverteilung eines Rücklichts, eines Bremslichts, eines Blinklichts usw. bilden.

Ein weiterer Gegenstand der Erfindung ist ein Kraftfahrzeugscheinwerfer umfassend eine elektronische Baukomponente, eine Schaltungsträgeranordnung, ein Leuchtmodul und/oder eine Kraftfahrzeugleuchtkomponente gemäß der Erfindung. Bei dem Kraftfahrzeugscheinwerfer handelt es sich insbesondere um einen Frontscheinwerfer. Zweckmäßigerweise ist der erfindungsgemäße Kraftfahrzeugscheinwerfer nach an sich bekannten Scheinwerferbauprinzipien aufgebaut und umfasst ein Gehäuse mit einer Lichtaustrittsöffnung, die mit einer Streuscheibe bzw. einer Abdeckscheibe verdeckt sein kann. Moderne Kraftfahrzeugscheinwerfer weisen häufig mehrere Leuchtmodule und/oder Kraftfahrzeugleuchtkomponenten auf, die für sich genommen oder im Zusammenwirken einzelne Lichtfunktionen übernehmen können. Diese Leuchtmodule bzw. Kraftfahrzeugleuchtkomponenten sind häufig in unmittelbarer Nähe zueinander im Scheinwerfergehäuse angeordnet. Der Kraftfahrzeugscheinwerfer gemäß der Erfindung kann daher ein oder mehrere erfindungsgemäße Leuchtmodule und/oder Kraftfahrzeugleuchtkomponenten enthalten, z.B. ein Abblendlichtmodul, ein Fernlichtmodul, eine Tagfahrlichteinheit, eine Blinklichteinheit etc. zum Erzeugen einer Abblendlichtverteilung, einer Fernlichtverteilung, einer Lichtverteilung eines Tagfahrlicht, eines Blinklichts usw.

Der Begriff "Kraftfahrzeug" (KFZ) wie hierin verwendet bezieht sich auf ein- oder mehrspurige motorisierte landgebundene Fahrzeuge wie Motorräder, PKWs, LKWs und dergleichen.

Im Folgenden wird die Erfindung anhand von nicht einschränkenden Ausführungsformen, die in den Figuren veranschaulicht sind, sowie anhand von Beispielen näher erläutert.
**Fig. 1** zeigt eine schematische Explosivdarstellung eines Leuchtmoduls für einen Kraftfahrzeugscheinwerfer, das eine erfindungsgemäße Lötverbindung aufweist.
**Fig. 2** zeigt eine vereinfachte schematische Darstellung der Schaltungsträgeranordnung des Leuchtmoduls aus Fig. 1.
**Fig. 3A** und **Fig. 3B** veranschaulicht einen SMT-Bestückungsvorgang anhand von Schnittdarstellungen durch eine Schaltungsträgeranordnung unter Verwendung eines erfindungsgemäßen Lots.
**Fig. 4** zeigt die Solidustemperaturen in einem ternären Sn-Bi-In-System.
**Fig. 5** zeigt eine dynamische Differenzkalorimetrie-Messung (DSC, differential scanning calorimetry) einer Lotlegierung gemäß der Erfindung.
**Fig. 6** zeigt eine rasterelektronenmikroskopische (REM)-Aufnahme einer Lotlegierung gemäß der Erfindung.
**Fig. 7a** und **Fig. 7b** zeigen REM-Aufnahmen einer im Zugversuch geschädigten binären Sn37Bi-Vergleichs-Lotlegierung, welche Mikrorisse ("Mikrovoids") an der Phasengrenzfläche zwischen der Bismuth- und der Zinn-reichen Phase veranschaulichen.
**Fig. 8** zeigt eine schematische Darstellung einer Probenkörperanordnung zum Einsatz in einer Scherprüfung, in der die Haftfestigkeit/Kraft einer Lötverbindung getestet wird.
**Fig. 9** zeigt die gemessene Haftfestigkeit/Kraft einer Lötverbindung aus einer erfindungsgemäßen Lotlegierung vor (linke Abbildung/Messung 1) und nach (rechte Abbildung/ Messung 2) lokaler Erwärmung der Lötverbindung/Lötstelle.

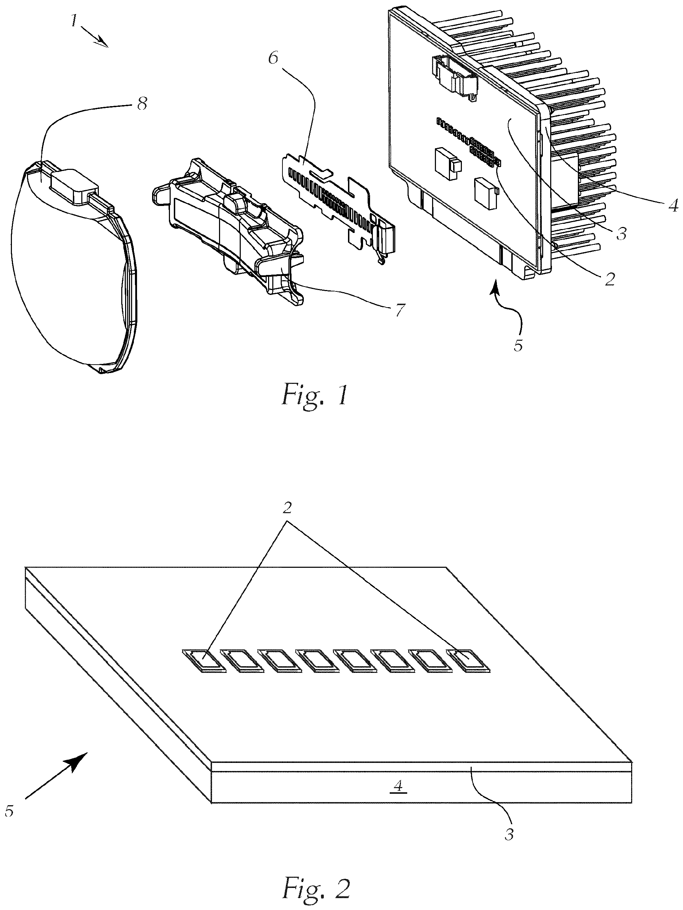

In den folgenden Figuren 1, 2, 3A und 3B bezeichnen - sofern nicht anders angegeben - gleiche Bezugszeichen gleiche Merkmale.

**Fig. 1** zeigt eine schematische Explosivdarstellung eines Leuchtmoduls 1 für einen Kraftfahrzeugscheinwerfer, das eine erfindungsgemäße Lötverbindung (Lötstelle) umfassend eine erfindungsgemäße Lotlegierung aufweist. Das Leuchtmodul 1 umfasst eine Schaltungsträgeranordnung **5**, wobei die Schaltungsträgeranordnung 5 eine Leiterplatte **3** (printed circuit board, PCB), mit der Leiterplatte 3 verlötete elektronische Bauteile in Form von LED-Lichtquellen **2** (*light emitting diodes* 2) sowie einen Kühlkörper **4** aufweist. Die Leiterplatte 3 ist nach an sich bekannten Prinzipien aufgebaut und weist Leiterbahnen und elektrische Leiterplattenkontaktflächen auf. Die Kontaktflächen der LED-Lichtquellen 2 sind mit den an der Leiterplatte 3 angeordneten Leiterplattenkontaktflächen mittels einer Lötverbindung basierend auf einer hierin beschriebenen erfindungsgemäßen Sn-Bi-In-Lotlegierung miteinander verbunden. Das gezeigte beispielhafte Leuchtmodul 1 weist ferner in Lichtabstrahlrichtung eine als Elektromagnetische Verträglichkeit (EMV)- und Hitzeschutzblech dienende Halterung **6**, eine Primäroptik **7** sowie eine Sekundäroptik **8** auf. Das von den LED-Lichtquellen 2 emittierte Licht wird nach an sich bekannter Art von der Primäroptik 7 und der Sekundäroptik 8 entsprechend geformt, so dass nach Austritt des Lichts aus dem Leuchtmodul 1 eine gewünschte Lichtverteilung, z.B. eine Signallicht-, eine Abblendlicht- oder eine Fernlichtverteilung, erzeugt wird. Einer Fachperson auf dem Gebiet von Kraftfahrzeugscheinwerfer-Leuchtmodulen wird klar sein, dass das Leuchtmodul 1 nur ein Beispiel unter vielen ist und dass es zusätzlich oder anstelle der Komponenten 6, 7 und 8 andere für Scheinwerfer-Leuchtmodule übliche bzw. bekannte Komponenten aufweisen kann.

**Fig. 2** zeigt eine vereinfachte schematische Darstellung der Schaltungsträgeranordnung 5 des Leuchtmoduls 1 aus Fig. 1, umfassend die Leiterplatte 3, die mit der Leiterplatte 3 verlöteten LED-Lichtquellen 2 und den Kühlkörper 4. Die Kontaktflächen der LED-Lichtquellen 2 sind wie erwähnt mit den an der Leiterplatte angeordneten Leiterplattenkontaktflächen mittels einer Lötverbindung basierend auf der hierin beschriebenen erfindungsgemäßen Sn-Bi-In-Lotlegierung miteinander verbunden.

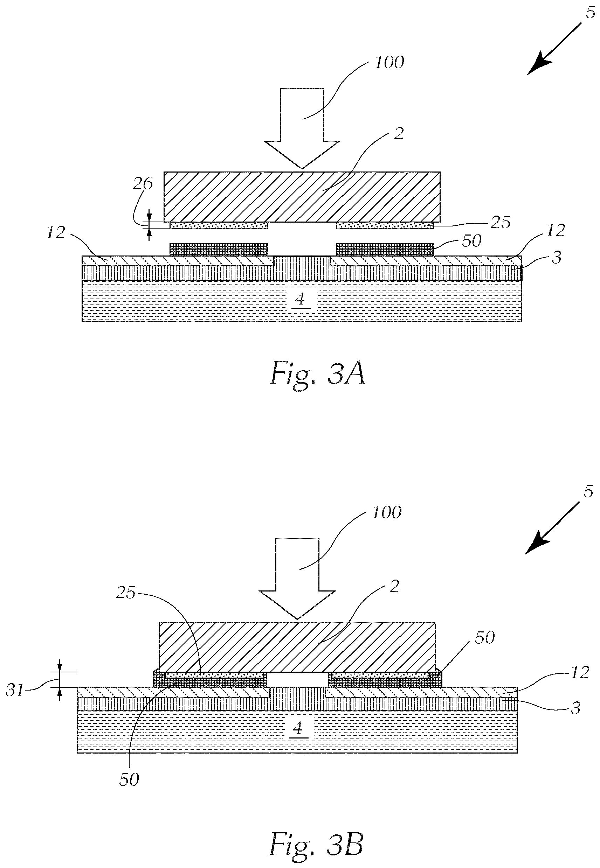

**Fig. 3A** und **Fig. 3B** veranschaulichen einen SMT (*Surface Mount Technology*)-Bestückungsvorgang im Reflow-Lötververfahren anhand von Schnittdarstellungen durch einen vergrößert dargestellten Teilbereich der Schaltungsträgeranordnung 5 unter Verwendung einer erfindungsgemäßen Sn-Bi-In-Lotverbindung wie sie hierin beschrieben und definiert ist. Wie allgemein bekannt ist, befinden sich im SMT-Verfahren elektrische Anschlüsse bzw. Kontaktflächen von elektronischen Bauteilen und die korrespondierenden Kontaktflächen der Leiterplatte jeweils an den Oberflächen, sodass die elektronischen Bauteile lediglich an der Oberfläche der Leiterplatte befestigt werden müssen und auf das Vorsehen von Durchgangsbohrungen verzichtet werden kann. Die Kontaktflächen der Leiterplatte werden hierbei zuerst mit einem Lötmittel, zumeist einer Lotpaste, beschichtet. Im Anschluss erfolgt die Bestückung der Leiterplatte mit den elektronischen Bauteilen. Die auf dem Kühlkörper 4 aufgebrachte Leiterplatte 3 gemäß dem gezeigten Beispiel weist folglich nach an sich bekannter Art Leiterbahnen mit Kontaktflächen **12** (Lötflächen bzw. "Kontakt-Pads" der Leiterplatte 3) auf ihrer Oberfläche auf. Die Kontaktflächen 12 weisen eine Beschichtung mit einer Lotpaste umfassend die erfindungsgemäße Sn-Bi-In-Lotlegierung **50** auf. Die LED-Lichtquelle 2 weist korrespondierende Kontaktflächen **25** (Lötflächen bzw. "Kontakt-Pads" der LED-Lichtquelle 2) mit einer Kontaktflächendicke **26** auf. Fig. 3A zeigt die Schaltungsträgeranordnung 5 vor der Bestückung. Die Bestückungskraft ist durch den Pfeil **100** dargestellt. Zur Herstellung einer dauerhaften elektrischen (und/ oder thermischen und/oder mechanischen) Verbindung zwischen der LED-Lichtquelle 2 und der Leiterplatte 3 im Reflow-Lötverfahren werden die Lotpaste, umfassend die Lotlegierung 50, und die Kontaktflächen 12 und 25 nach der Bestückung dergestalt erhitzt, dass die Lotpaste schmilzt und sich mit den Kontaktflächen 12, 25 der Leiterplatte 3 und der LED-Lichtquelle 2 in Form einer stabilen Lötverbindung verbindet. Fig. 3B zeigt die Schaltungsträgeranordnung 5 nach der Bestückung und nach dem Reflow-Lötvorgang, in welchem eine stabile Lötverbindung/Lötstelle, die das erfindungsgemäße Sn-Bi-In-Lot 50 enthält, erhalten wird. Der Abstand zwischen der Leiterplatte 3 und der damit verlöteten LED-Lichtquelle, somit die Dicke der Lötverbindung/Lötstelle, ist durch das Bezugszeichen **31** angegeben. Die verwendete Lotpaste enthält sowohl ein Lötgut, nämlich die erfindungsgemäße Sn-Bi-In-Lotlegierung 50, als auch Flussmittel, die die Lötbarkeit (insbesondere das Fluss- und Benetzungsverhalten) des Lötguts verbessern. Überschüssiges, in der Lotpaste eingebettetes Flussmittel wird beim Erhitzen und Aufschmelzen der Lotpaste gasförmig und entweicht in Form von Bläschen. Die Lotpaste wird zumeist in einem Sieb- bzw. Masken-Druckprozess in Form von Lötdepots auf die Leiterplatte 3 aufgebracht, bevor elektronische Bauteile wie die in diesem Beispiel gezeigten LED-Lichtquellen 2, darauf platziert werden.

Wie weiter oben beschrieben ist, weist die erfindungsgemäße Lotlegierung 50 eine Solidustemperatur (T_{solidus}) von ≥ 75°C und eine Liquidustemperatur (T_{liquidus}) von ≤ 210°C, vorzugsweise eine Solidustemperatur (T_{solidus}) von ≥ 75°C und eine Liquidustemperatur (T_{liquidus}) von ≤ 185°C, auf. Wenn das in eine Kraftfahrzeugleuchtkomponente eines Kraftfahrzeugs, z.B. in einen Kraftfahrzeugscheinwerfer, eingebaute Leuchtmodul 5 nun in Betrieb genommen wird, so wird im Nennbetrieb der Kraftfahrzeugleuchtkomponente im Bereich der Lötverbindung ein bestimmter Nennbetriebstemperaturbereich erreicht; die Temperaturen an der Lötverbindung variieren dabei typischerweise zwischen ca. -20°C bis ca. +135°C. Erfindungsgemäß überlappt der Nennbetriebstemperaturbereich zumindest teilweise mit dem Temperaturbereich zwischen der Solidustemperatur (T_{solidus}) und der Liquidustemperatur (T_{liquidus}) der in der Lötverbindung enthaltenen Lotlegierung 50 und liegt unterhalb der Liquidustemperatur (T_{liquidus}), sodass die Lotlegierung 50 der Lötverbindung in einen halbflüssigen Zustand gelangt und damit in der Lage ist, aufgetretene Risse oder Fehlstellen in der Lötverbindung während des Nennbetriebs der Kraftfahrzeugleuchtkomponente zu heilen. Vorzugsweise liegt der Nennbetriebstemperaturbereich zwischen der Solidustemperatur (T_{solidus}) und der Liquidustemperatur (T_{liquidus}) der in der Lötverbindung enthaltenen Lotlegierung 50.

### Beispiel 1: Ausführungsbeispiele für erfindungsgemäße Lotlegierungen und Herstellungsverfahren

**Tabelle 1 zeigt beispielhafte Lotlegierungen gemäß der Erfindung:**

| **Legierung** | **Legierungs-Bezeichnung** | **Zusammensetzung (in Gew.-%)** | **Kommentar** | **T-_{Solidus}** | ***)T-_{Liquidus}** |
|---|---|---|---|---|---|
| **(A)** | #1601 | Sn-31Bi-9,5In | Nominallegierung | 94 | 164 |
| **(B)** | #16011 | Sn-31Bi-12In | Erhöhter Flüssiganteil bei niedrigen Temperaturen | 94 | 158 |
| **(C)** | #16012 | Sn-26Bi-7,5In | Verringerter Flüssiganteil bei niedrigen Temperaturen | 99 | 175 |
| **(D)** | #1601A | Sn-36Bi-9In | Legierung mit ausgeprägtem Heilungsverhalten bei hohen Temperaturen, bedingt geeignet bei kaltem Dauereinsatz oder starkem mechanischen Schock | 94 | 156 |
| **(E)** | #1601B | Sn-36Bi-9In-1Cu | #1601A optimiert für den Einsatz auf Kupfer ohne Diffusionsbarriere | 94 | 162 |
| **(F)** | #1601C | Sn-31Bi-6In | Kosten-optimierte Legierung durch niedrigen In-Anteil | 104 | 170 |
| **(G)** | #1601D | Sn-31Bi-6In-1Cu | #1601C optimiert für den Einsatz auf Kupfer ohne Diffusionsbarriere | 104 | 177 |
| **(H)** | #1601E | Sn-37Bi-12In | Legierung mit ausgeprägtem Heilungsverhalten bei hohen Temperaturen und sehr duktilem Verhalten unterhalb von T_{solidus} | 78 | 148 |
| **(I)** | #1601F | Sn-37Bi-12In-1Cu | #1601E optimiert für den Einsatz auf Kupfer ohne Diffusionsbarriere | 78 | 154 |
| **(J)** | #1601X | Sn-31Bi-9,5In-1Cu | #1601 optimiert für den Einsatz auf Kupfer ohne Diffusionsbarriere | 94 | 170 |
| Zu Spalte "Zusammensetzung (in Gew.-%)": die Zahlenangaben der Zusammensetzung beziehen sich auf Gewichtsprozent mit ad 100 Gew.-% Zinn; z.B. bespielhafte Zusammensetzung (A) #1601: 31 Gew.-% Bi, 9,5 Gew.-% In, Rest Sn (ad 100 Gew.-%). | | | | | |
| **)T-_{Liquidus}: Die in Tabelle 1 angeführten Liquidustemperaturen stellen Mittelwerte zwischen berechneten und gemessenen Werten dar. | | | | | |

Die Legierungen A, B, C, D, F, H in Tabelle 1 angeführten Lotlegierungen gemäß der Erfindung wurden gemäß dem folgenden Herstellungsverfahren hergestellt:
Alle Reinelemente werden entsprechend der geplanten Batchgröße eingewogen. Aus praktischen Gründen werden Zinn und Bismut in Form von Granullen / Pellets verwendet. Bei Ansätzen >200g reicht dann eine Einwaage auf +-1 Pellet als Genauigkeit aus. Indium wird mittels Stahlklinge aus Barrenmaterial geschnitten. Die Metalle werden dann in einem Gefäß aus Borsilikatglas unter Argonschutzatmosphäre mittels externer Widerstands- und Strahlungsheizung erhitzt. Die Homogenisierung erfolgt mittels Magnetrührer. Die Legierung wird für 5 Minuten auf T_{liquidus}+40K homogenisiert. Der Abguss erfolgt entweder in eine massive Kupferform (für Barrenmaterial) oder durch Absaugen in ein kaltes (Einweg-) Glasrohr für kleine, zylindrische Proben.

Die Legierungen E, G, I und J werden in einem gleichartigen Verfahren hergestellt, mit der einzigen Änderung, dass statt Reinzinn eine Bronze-artige Vorlegierung aus Zinn mit 5 Gew.-% Kupfer plus Reinzinn verwendet wird. Das Mischungsverhältnis von Vorlegierung und Reinzinn wird derart eingestellt, dass in der finalen Legierung die gewünschte Kupferkonzentration vorliegt.

Die Kinetik aller beteiligten Schmelz und Lösungsvorgänge ist ausreichend schnell, dass beim Erschmelzen der Legierung nie bis auf den Schmelzpunkt der Reinmetalle Zinn oder Bismut erhitzt werden muss. Die höherschmelzenden Metalle lösen sich in der anfangs Indium-reichen Schmelze bei niedriger Temperatur.

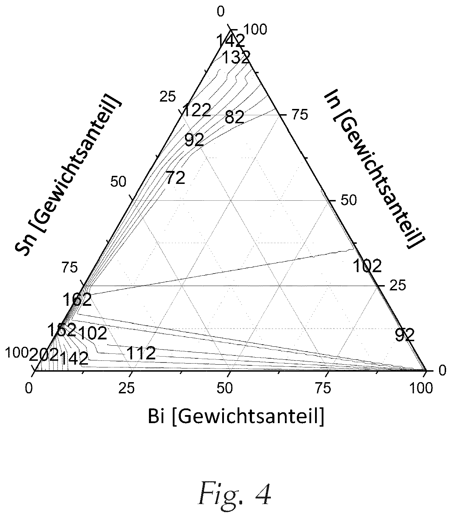

In Tabelle 1 sind zudem die Solidus- und Liquidustemperaturen der Lotlegierungen (A) - (J) angeführt. Zu Illustrationszwecken sind in Fig. 4 die Solidustemperaturen in einem ternären Sn-Bi-In-System gezeigt.

Als Vergleichs-Legierung (nicht erfindungsgemäß) wurde eine binäre Sn37Bi (37 Gew.-% Bismut; Rest Zinn) mittels eines Verfahrens, das analog zur Herstellung von Legierung A, B, C, D, F, H ist, hergestellt. Einziger Unterschied ist hier eine anfänglich stärkere Erwärmung auf ca. 280°C. Sobald Bismut zu schmelzen beginnt, entsteht eine Bismut-reiche Schmelze mit deutlich niedrigerem Solidus, in der sich dann zunehmend Bismut und Zinn lösen. Die Temperatur kann dann stufenweise auf T_{liquidus}+40K angepasst werden.

### Beispiel 2: Legierungscharakterisierung

### 2.1. Bestimmung von Solidustemperatur und Liquidustemperatur

Die Bestimmung der Solidustemperatur und der Liquidustemperatur mittels dynamischer Differenzkalorimetrie (DSC, differential scanning calorimetry) ist im Folgenden beispielhaft anhand der erfindungsgemäßen Legierung Sn-31Bi-9,5In (Tabelle 1: (A) #1601, Nominallegierung) gezeigt. Charakteristische Phasenübergänge im Bereich von 95°C bis 115°C können als eine Art Fingerprint genutzt werden, um den korrekten In-Gehalt, und bis zu einem gewissen Grad auch den Bi-Gehalt, in der Lotlegierung sicherzustellen.

Die DSC-Messung wurde wie folgt durchgeführt: Mit einem TA Instruments Q2000 DSC wurde in passivierten Aluminiumtiegeln drei Proben aus jedem Batch vermessen. Dazu wurden nach einem Konditionierungszyklus drei Zyklen vermessen und jeweils die Heizkurven gemittelt.

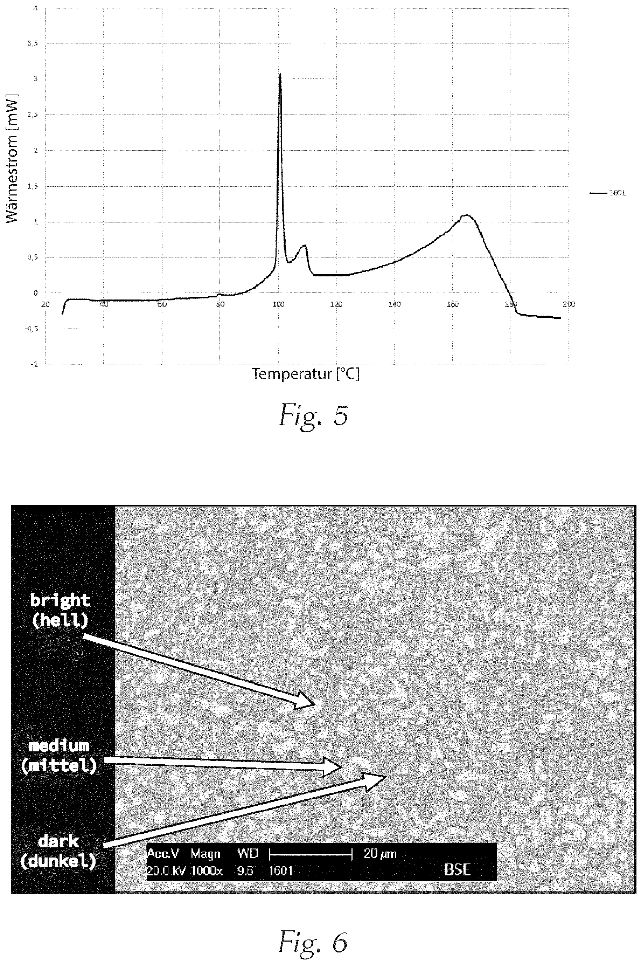

Das Ergebnis der DSC-Messung ist in Fig. 5 dargestellt. Das Lot (A) #1601 in seiner Nominalzusammensetzung weist eine Solidustemperatur von ca. 81°C, eine Liquidustemperatur von 165°C auf und ist für eine maximale Betriebstemperatur an der Lötstelle von nominal 135°C (50% Flüssiganteil, Limitierung der Einsatztemperatur siehe unten) ausgerichtet. Über dem Solidus steigt der Flüssiganteil anfangs nur langsam an. Ab ca. 100°C bis zum vollständigen Aufschmelzen der Bi-reichen Phase bei 110°C nimmt der Flüssiganteil dann schneller zu.

Wie anhand dieses Beispiels für eine Fachperson ersichtlich ist, kann die Intensität der Heilungseigenschaften des Lots über die Variation des (Bi,In)-Anteils (gegenüber Sn) eingestellt werden. Ein höherer Bismut- und Indiumgehalt führt zu einem höheren Flüssiganteil und damit zu einem aggressiveren Heilungsverhalten.

### 2.2. Darstellung und Charakterisierung des Legierungsgefüges mittels Rasterelektronenmikroskopie (REM)

Die Darstellung und Charakterisierung des Legierungsgefüges mittels Rasterelektronenmikroskopie ist im Folgenden beispielhaft anhand der erfindungsgemäßen Legierung Sn-31Bi-9,5In gezeigt.

Als Vergleich wurde die Vergleichs-Lotlegierung (nicht erfindungsgemäß; siehe oben) Sn37Bi herangezogen und ebenfalls mittels REM untersucht.

Die REM-Untersuchung wurde mit einem Philips XL30 scanning electron microscope mit EDAX Modul durchgeführt.

Die REM-Aufnahme der Legierung Sn-32Bi-9In ist in Fig. 6 dargestellt.

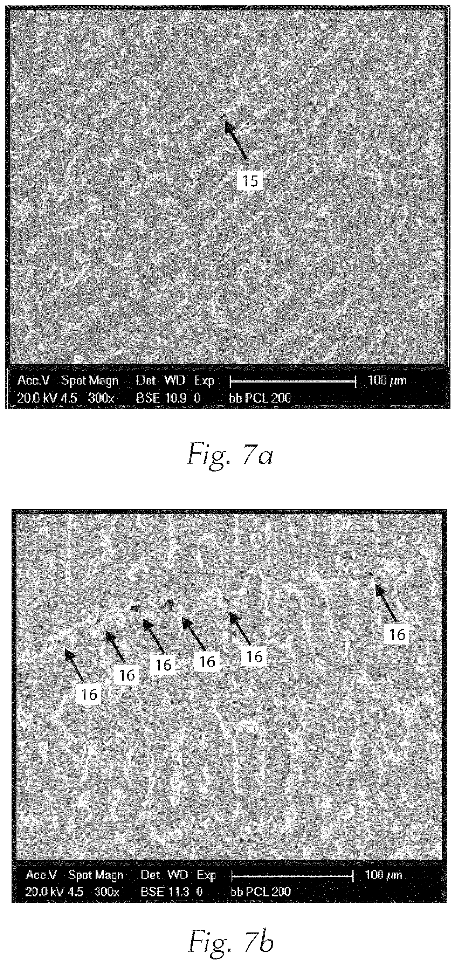

Fig. 7a und Fig. 7b zeigen REM-Aufnahmen einer im Zugversuch geschädigten binären Sn37Bi-Vergleichs-Lotlegierung (37 Gew.-% Bismut, Rest (ad 100 Gew.-%) Zinn), welche Mikrorisse ("Mikrovoids"; durch Pfeile 15, 16 gekennzeichnet) an der Phasengrenzfläche zwischen der Bismuth- und der Zinn-reichen Phase veranschaulichen. Die Zugversuche wurden an Rundstabproben durchgeführt. In Vorversuchen wurden die Bruchdehnung und Zugfestigkeit (*ultimate tensile strength,* UTS) bestimmt. Mehrere (frische) Proben wurden dann auf verschiedene Dehnungswerte gestreckt. In den stark deformierten Bereichen konnte die Entstehung und Evolution von Rissen in Form von zuerst lokalisierten (siehe Fig. 7a) und später verschmelzenden Mikrovoids (siehe Fig. 7b) nachgewiesen werden. Details hierzu siehe *Micromechanics-based damage model for liquid-assisted healing* (Georg Siroky, Elke Kraker, Dietmar Kieslinger, Ernst Kozeschnik, Werner Ecker; 2021/1; International Journal of Damage Mechanics; Band 30 Ausgabe 1 Seiten 123-144; SAGE Publications)

Anders als bei klassischen Loten, die ausschließlich unterhalb von der Erstarrungstemperatur eingesetzt werden, sind in der vorliegenden Erfindung die mechanischen Eigenschaften der einzelnen Phasen getrennt zu bewerten. Dabei ist zu beachten, dass die makroskopischen Eigenschaften aus dem Zusammenwirken der mikroskopischen Materialparameter und der Topologie bzw. räumlichen Verteilung der betreffenden Phase in der Lotverbindung entstehen. Im teilflüssigen Bereich kommt dem räumlichen Aufbau der festen Phase - im vorliegenden Fall der Sn-reichen BCT_A5 Phase (siehe Pfeil mit "Dunkel" in Fig.6) - besondere Bedeutung zu. Diese Phase bildet ein zusammenhängendes Gerüst und gibt der Lötstelle im teilflüssigen Bereich ein festkörperartiges Verhalten. Eine Bi-reiche Phase - in der Fig. 6 mit "Hell" markiert - schmilzt als erste auf und ermöglicht so über das gesamte Volumen verteilt das Auffüllen von stressinduzierten Mikroschäden. Mit steigender Temperatur gehen auch Teile des Sn-reichen Gerüsts in den flüssigen Zustand über. Bis zu einem gewissen Grad ermöglicht das einen besseren Transport der flüssigen Anteile, weil anfangs lokalisierte "Pfützen" zu einem verzweigten 3D-Netzwerk verschmelzen.

Der sinnvoll nutzbare Temperaturbereich wird nach oben hin einerseits durch die Abnahme der mechanischen Belastbarkeit limitiert, andererseits aber auch durch zu starke Transportprozesse. Ein hoher Flüssiganteil, in einer, über weite Bereiche verbundenen Topologie, fördert unerwünschte Prozesse. Temperaturgradienten können zu einer unerwünschten Stofftrennung führen (lokale Änderungen in der Legierungszusammensetzung), das Einschleppen von legierungsfremden Bestandteilen aus den Fügepartnern (Grenzflächen) wird begünstigt. Bis zu welcher Temperatur eine Legierung eingesetzt werden kann, hängt davon ab, wie aggressiv die Heilung ausfallen soll, d.h. wieviel Schädigung pro Heilungszyklus abgebaut werden muss. Bevorzugt sind oft auftretende Heilungszyklen, die dann jeweils nur wenig Flüssiganteil zur Heilung benötigen. Ist das anwendungsbedingt nicht möglich, muss mit mehr Flüssiganteil gearbeitet werden, was - wie oben beschrieben - andere Schädigungsmechanismen anstößt, die schlussendlich auch wieder lebensdauerlimitierend wirken, wenn auch mit einer gesteigerten Lebensdauer im Vergleich zu einer nicht heilenden Lotverbindung.

Klassische Bismut-haltige Lote sind für tendenziell sprödes Verhalten bekannt. Mikroskopische Schäden treten dabei bevorzugt an Phasengrenzen auf (siehe die REM-Aufnahmen in Fig. 7a/7b zur Vergleichs-Legierung Sn35Bi)) und breiten sich entlang der Bismut-reichen Bereiche aus. Das Niedrigtemperaturverhalten (unterhalb T_{solidus}) der beschriebenen Legierung unterscheidet sich hier nur wenig vom einfachen Sn-Bi System in dem Sinn, dass eine Bismut-Indium Phase vorzugsweise an der Grenzfläche zwischen Sn- und Bi-reichen Bereichen auftritt (mit "Mittel" in Fig. 6 gekennzeichnet) und gewissermaßen als Puffer fungiert. Weitaus wichtiger ist jedoch, dass die strukturellen Schäden direkt an oder in den Bismut-reichen Bereichen auftreten - eben diese Bereiche schmelzen bei der Selbstheilung als erstes auf und können so die strukturellen Schäden heilen.

### 2.3. Zyklische einfache Scherprüfung

### 2.3.1. Probenvorbereitung

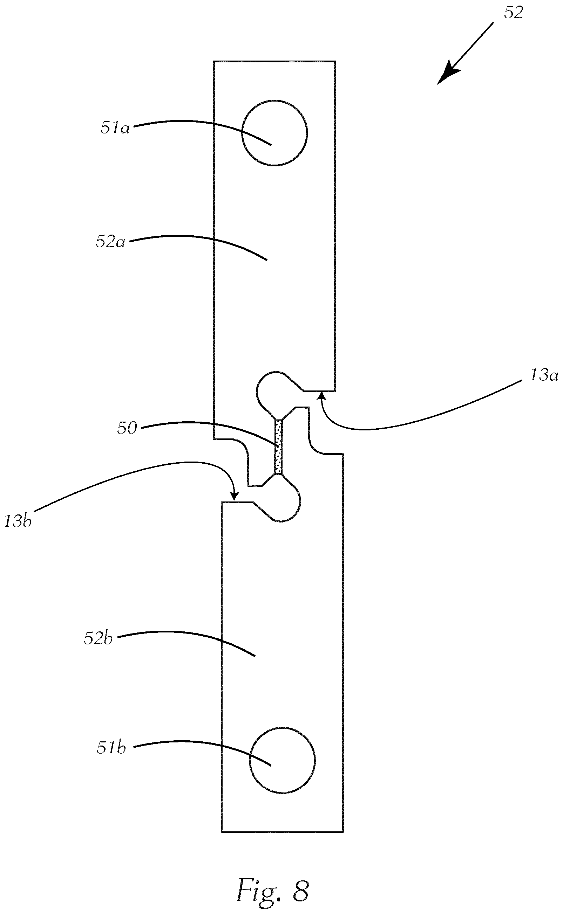

Es wurden Probensubstrate für die Überlappungs- und zyklische Scherprüfung von Lötstellen entworfen. Fig. 8 zeigt eine schematische Darstellung einer Probenkörperanordnung **52** zum Einsatz in einer Scherprüfung, in der die Haftfestigkeit/Kraft einer Lötverbindung getestet wird. Die Probenkörperanordnung 52 umfasst einen oberen Probenkörper **52a** mit einem Befestigungsloch **51a** und einen unteren Probenkörper **52b** mit einem Befestigungsloch **51b.** Über die Befestigungslöcher 51a, 51b wird die Probenkörperanordnung 52 mittels (nicht dargestellten) Befestigungsstangen in der Prüfmaschine montiert. Die Probenkörper 52a, 52b weisen zudem jeweils eine Referenzfläche **13a** bzw. **13b** für eine optionale Bestimmung der Verschiebung mittels eines mechanischen Extensiometers auf. Wie unten näher beschrieben, sind die beiden Probenkörper 52a, 52b mittels einer Lötverbindung (Lötstelle), die aus der erfindungsgemäßen Lotlegierung **50** (im gezeigten Beispiel Lotlegierung #1601, siehe Tabelle 1) hergestellt wurde, miteinander verbunden. Die Konstruktion gewährleistet eine einachsige Belastung der Proben, was durch eine mechanische Finite-Element-Methode (FEM)-Simulation validiert wurde. Das Material der Probenkörper 52a, 52b ist Kupfer, das aufgrund seiner mechanischen Eigenschaften (d. h. seines deutlich höheren Moduls im Vergleich zu den zu prüfenden Lotlegierungen) sowie seiner bedeutenden Rolle in SMT-Lötprozessen ausgewählt wurde. Aus praktischen Gesichtspunkten wurden die Probenkörper 52a, 52b mit typischen Leiterplattenoberflächenmaterialien, nämlich ENIG, ImmSn und OSP, beschichtet, um den Einfluss der Oberflächenbeschichtung auf die mechanischen Eigenschaften der Lötstelle beobachten zu können.

Um die Einstellbarkeit und Gleichmäßigkeit der Lötstellendicke zu gewährleisten, wurden ein mechanischer Rahmen und eine Vorrichtung zur vertikalen und horizontalen Verstellung der Probenkörper 52a, 52b konstruiert und gefertigt.

Eine Scherprobe mit der erfindungsgemäßen Legierung #1601 (Sn-31Bi-9,5In - vgl. Tabelle 1) wurde in einem Standard-SMT-Ofen hergestellt. Das Heizprofil des Ofens wurde vorher kalibriert, um ein einwandfreies Löten der Probe zu gewährleisten.

Aus gegossenen Lotblöcken wurden mit einem Schmuckwalzwerk Preform-Folien in der gewünschten Dicke gewalzt. Zur Herstellung der Lötverbindung/Lötstelle wurde auf die gegenüberliegenden Oberflächen der Probenkörper 52a, 52b Flussmittelpaste vom Typ TF-M8800R des Herstellers KOKI aufgetragen. Die Scherprobe wurde mit einer nominalen Lötstellendicke von 100 µm hergestellt, als praktischer Kompromiss zwischen den typischen Lötstellenabmessungen für die gewünschte Anwendung und den praktischen Grenzen für die Toleranzen der Probenherstellung und der Prüfeinrichtung.

### 2.3.2. Ablauf des Experiments

Die zyklische Scherprüfung wurde auf einer Universalprüfmaschine Zwick-Roell Z010, ausgestattet mit einer 500 N Kraftmessdose, in einem traversenweggesteuerten Prüfablauf durchgeführt.

Die Traversenwegwerte für die zyklische Prüfung wurden so gewählt, dass sie:
a) deutlich niedriger als die typische Scherfestigkeit der Lötstelle sind (vorher durch einfache Scherprüfung ermittelt).
b) grob repräsentativ für die typischen realen Scherwinkel, die während der thermischen Zyklen beobachtet werden, sind.
c) die Beobachtung von niedrigzyklischer Ermüdung in einem begrenzten Zeitrahmen ermöglichen.

Diese Überlegungen führten zu Traversenwegen, die von 30 bis 120 µm reichten. Die Scherraten reichten von 0,1 bis 0,5 mm/min, wobei keine signifikanten Unterschiede zwischen den verschiedenen Scherraten beobachtet wurden. Nach dem Be- und Entlasten in jedem Zyklus wurde eine Ruhezeit von 20 sec eingehalten, um die Kriechverformung unter Zug bzw. Druck zu ermöglichen und zu beobachten. Die zyklische Prüfung wurde in Inkrementen von 50 bis 100 Zyklen durchgeführt.

In-situ-Erwärmungsexperimente wurden an Proben durchgeführt, die einer zyklischen Scherprüfung unterzogen wurden, um zu versuchen, mikrostrukturelle Schäden umzukehren, die durch den kumulativen Effekt der plastischen Verformung unter der oben erwähnten zyklischen Belastung entstanden sind. Der obere Teil der Probe wurde aus der entsprechenden Spannbacke gelöst, während der untere Teil eingespannt blieb. Dieser eingespannte untere Teil wurde jedoch - bis zu einem gewissen Grad - durch ein Paar dünner Aluminiumoxidplatten von der Spannbacke thermisch isoliert. Dies war notwendig, um den Wärmefluss von der Probe zur Spannbacke zu begrenzen und die Probe für mindestens 10 sec auf die erforderliche Lötstellentemperatur von tₛₒₗ +20 K aufzuheizen (wobei tₛₒₗ die Solidustemperatur des entsprechenden nicht-eutektischen Lotmaterials unter Test bezeichnet). Zur lokalen Erwärmung der Probe wurde ein Hochleistungslötkolben (Weller WXP 200; mit der Spitze 'F') verwendet. Die Probentemperatur wurde in situ mit einem Thermoelement vom Typ K überwacht, das in praktischer Nähe der Lötstelle platziert wurde. Die Temperaturwerte des Thermoelements wurden verifiziert, sowie der Temperatur-Offset zur Lötstelle mittels IR-Thermografie ermittelt. Dieser Temperaturversatz wurde bei dem Experiment berücksichtigt.

### 2.3.3. Ergebnisse

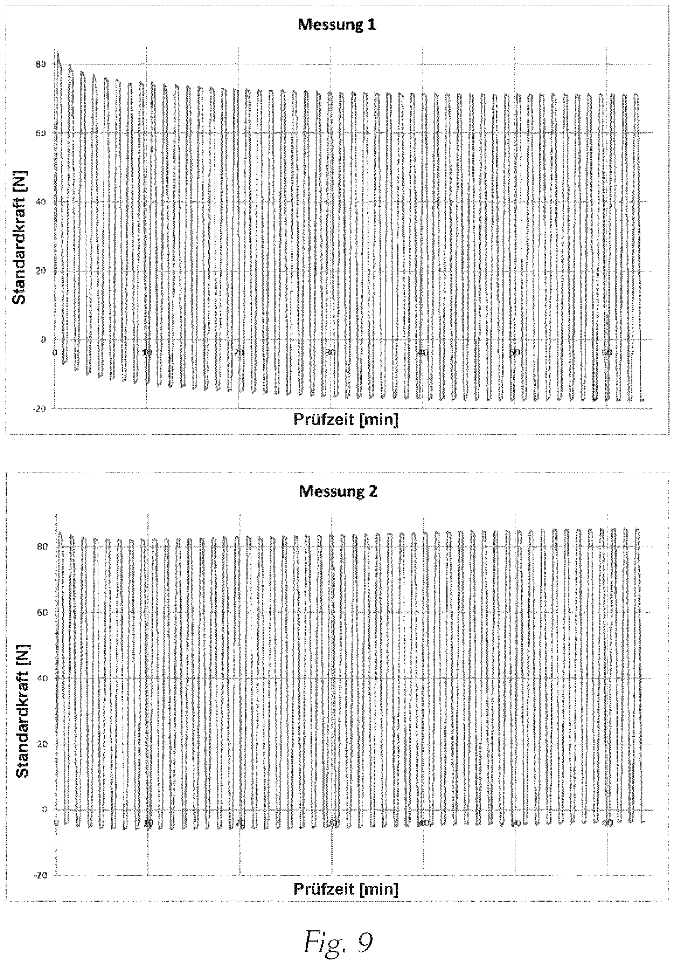

Eine Probe mit einer Lötstelle aus der erfindungsgemäßen Legierung #1601 (Nenndicke der Lötstelle: 100 µm; in Fig. 8 durch das Bezugszeichen 50 gekennzeichnet) wurde 50-mal mit einem Traversenweg von 30 µm und einer Scherrate von 0,1 mm/min zykliert. Die Probe zeigte während des Experiments einen deutlichen Abfall der Maximalkraft, während die Kraft in Gegenrichtung anstieg (siehe Fig. 9/Messung 1). Anschließend wurde die Probe für >10s auf >110°C erwärmt (gemäß dem oben beschriebenen Verfahren) und die zyklische Prüfung wurde mit den vorherigen Parametern fortgesetzt (siehe Fig. 9/Messung 2).

Die Ergebnisse zeigen, dass eine in-situ Teilverflüssigung der Lötstelle sowohl den Lastabfall in der positiven Richtung als auch den Anstieg in der negativen Richtung vermeidet. Dies deutet stark darauf hin, dass eine partielle Verflüssigung oberhalb von tₛₒₗ unter bestimmten Umständen tatsächlich zu einer effektiven Umkehrung der akkumulierten mikrostrukturellen Schädigung durch plastische und Kriechverformung führen kann.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Nicht-eutektische Lotlegierung mit einer Legierungszusammensetzung bestehend aus, in Gew.-%:
• Bi: 22,0 - 40,0 Gew.-%
• In: 6,0 -12,0 Gew.-%
• Cu: bis zu 1,4 Gew.-%
• Rest Sn und unvermeidbare Verunreinigungen.

2. Nicht-eutektische Lotlegierung nach Anspruch 1, mit einer Legierungszusammensetzung bestehend aus, in Gew.-%:
• Bi: 25,0 - 37,0 Gew.-%
• In: 8,5 -12,0 Gew.-%
• Cu: bis zu 1,4 Gew.-%
• Rest Sn und unvermeidbare Verunreinigungen.

3. Nicht-eutektische Lotlegierung nach Anspruch 1 oder 2, mit einer Legierungszusammensetzung bestehend aus, in Gew.-%:
• Bi: 25,0 - 37,0 Gew.-%
• In: 9,0 - 11,0 Gew.-%
• Cu: bis zu 1,4 Gew.-%
• Rest Sn und unvermeidbare Verunreinigungen.

4. Nicht-eutektische Lotlegierung nach einem der Ansprüche 1 bis 3, mit einer Legierungszusammensetzung bestehend aus, in Gew.-%:
• Bi: 31,0 Gew.-%
• In: 9,5 Gew.-%
• Cu: bis zu 1,4 Gew.-%
• Rest Sn und unvermeidbare Verunreinigungen.

5. Nicht-eutektische Lotlegierung nach Anspruch 1, enthaltend, in Gew.-%:
• Bi: 25 - 37 Gew.-%.

6. Nicht-eutektische Lotlegierung nach Anspruch 1, enthaltend, in Gew.-%:
• In: 8,5 - 12 Gew.-%, vorzugsweise 9,0 - 11,0 Gew.-%, am meisten bevorzugt etwa 9,5 Gew.-%.

7. Nicht-eutektische Lotlegierung nach einem der vorhergehenden Ansprüche, die eine Solidustemperatur (T_{solidus}) von ≥ 75°C und eine Liquidustemperatur (T_{liquidus}) von ≤ 210°C, vorzugsweise eine Solidustemperatur (T_{solidus}) von ≥ 75°C und eine Liquidustemperatur (T_{liquidus}) von ≤ 185°C, aufweist.

8. Lötpaste, umfassend: ein Gemisch aus einem Lotpulver aus einer nicht-eutektischen Lotlegierung mit einer Legierungszusammensetzung gemäß einem der Ansprüche 1 bis 7 und Flussmittel.

9. Lötverbindung enthaltend eine nicht-eutektische Lotlegierung mit einer Legierungszusammensetzung gemäß einem der Ansprüche 1 bis 7.

10. Verwendung einer Lotlegierung nach einem der Ansprüche 1 bis 7 als Elektroniklot und als Lot zum Herstellen zumindest einer Lotverbindung zwischen zumindest einem elektronischen Bauteil und zumindest einem Schaltungsträger, wobei der Schaltungsträger vorzugsweise eine Leiterplatte ist.

11. Verwendung nach Anspruch 10, als Lot zum Herstellen zumindest einer Lotverbindung zwischen zumindest einem elektronischen Bauteil und zumindest einem Schaltungsträger, insbesondere einer Leiterplatte, wobei die Lotverbindung einen Bestandteil einer Fahrzeugkomponente, bevorzugt einer Fahrzeugleuchtvorrichtung, besonders bevorzugt eines Kraftfahrzeugscheinwerfers, bildet.

12. Elektronische Baukomponente umfassend: eine Lötverbindung, die durch Verlöten der Lötpaste gemäß Anspruch 8 ausgebildet ist.

13. Schaltungsträgeranordnung (5), umfassend zumindest eine elektrische Kontaktfläche (12) und zumindest ein mit der zumindest einen elektrischen Kontaktfläche (12) mittels einer Lötverbindung verbundenes elektronisches Bauteil (2), **dadurch gekennzeichnet, dass** die Lötverbindung eine nicht-eutektische Lotlegierung (50) mit einer Legierungszusammensetzung gemäß einem der Ansprüche 1 bis 7 enthält oder aus dieser besteht.

14. Schaltungsträgeranordnung (5) nach Anspruch 13, wobei das zumindest eine elektronische Bauteil (2) eine Lichtquelle ist.

15. Leuchtmodul (1) für eine Kraftfahrzeugleuchtkomponente umfassend zumindest eine Schaltungsträgeranordnung nach Anspruch 14.

16. Kraftfahrzeugleuchtkomponente umfassend zumindest eine Schaltungsträgeranordnung (5) nach Anspruch 13 oder 14 und/oder zumindest ein Leuchtmodul (1) gemäß Anspruch 15, wobei die Kraftfahrzeugleuchtkomponente im Nennbetrieb im Bereich der Lötverbindung einen Nennbetriebstemperaturbereich aufweist, wobei der Nennbetriebstemperaturbereich zumindest teilweise mit dem Temperaturbereich zwischen der Solidustemperatur (T_{solidus}) und der Liquidustemperatur (T_{liquidus}) der in der Lötverbindung enthaltenen nicht-eutektischen Lotlegierung (50) überlappt und unterhalb der Liquidustemperatur (T_{liquidus}) liegt, vorzugsweise liegt der Nennbetriebstemperaturbereich zwischen der Solidustemperatur (T_{solidus}) und der Liquidustemperatur (T_{liquidus}) der in der Lötverbindung enthaltenen nicht-eutektischen Lotlegierung (50), sodass die nicht-eutektische Lotlegierung (50) der Lötverbindung in der Lage ist, aufgetretene Risse oder Fehlstellen in der Lötverbindung während des Nennbetriebs der Kraftfahrzeugleuchtkomponente zu heilen.

17. Signalleuchte, insbesondere Fahrtrichtungsanzeigeleuchte oder Heckleuchte, umfassend eine elektronische Baukomponente nach Anspruch 12, eine Schaltungsträgeranordnung (5) nach Anspruch 13 oder 14, ein Leuchtmodul (1) nach Anspruch 15 und/oder eine Kraftfahrzeugleuchtkomponente nach Anspruch 16.

18. Kraftfahrzeugscheinwerfer umfassend eine elektronische Baukomponente nach Anspruch 12, eine Schaltungsträgeranordnung (5) nach Anspruch 13 oder 14, ein Leuchtmodul (1) nach Anspruch 15 und/oder eine Kraftfahrzeugleuchtkomponente nach Anspruch 16.
